# EUROPÄISCHE PATENTSCHRIFT

(11) **EP 3 501 830 B1**
(45) Veröffentlichungstag und Bekanntmachung des Hinweises auf die Patenterteilung: **12.05.2021**
(21) Anmeldenummer: 18213939.4
(22) Anmeldetag: 19.12.2018
(51) Int. Cl.: B41F 33/00, B41F 33/16, G06K 19/06

(54) **VORRICHTUNG UND VERFAHREN ZUR BEARBEITUNG EINER MATERIALBAHN**
DEVICE AND METHOD FOR PRODUCING A WEB OF MATERIAL
DISPOSITIF ET PROCÉDÉ DE FABRICATION D'UNE BANDE DE MATÉRIAU

(30) Priorität: 22.12.2017 DE 102017223730
(43) Veröffentlichungstag der Anmeldung: 26.06.2019
(73) Patentinhaber: Texmag GmbH Vertriebsgesellschaft, 8800 Thalwil (CH)
(72) Erfinder: Eder, Alfred, 86485 Biberbach (DE); Vonderheiden, Jörg, 22941 Bargteheide (DE)
(74) Vertreter: Peterreins Schley

(56) Entgegenhaltungen:
- DE-A1- 10 224 372
- DE-C1- 10 101 860

## Beschreibung

### Technisches Gebiet

Die Erfindung betrifft eine Vorrichtung zur Bearbeitung einer Materialbahn nach dem Oberbegriff des Anspruchs 1. Die Erfindung betrifft zudem ein Verfahren zur Bearbeitung einer Materialbahn nach dem Oberbegriff des Anspruchs 14. Die Erfindung betrifft zudem eine Materialbahn nach dem Oberbegriff des Anspruchs 12 und eine Kartonage, hergestellt mittels einer erfindungsgemäßen Materialbahn.

### Hintergrund

WO 2017/051146 A1 beschreibt eine Wellpappenanlage, bei der eine bedruckte Rolle bzw. Materialbahn als Oberfläche auf Wellpappe aufgebracht wird, wobei die Wellpappe nachfolgend zugeschnitten wird. Die Materialbahn enthält neben den eigentlichen Druckbildern zur optischen Ausgestaltung der Zuschnitte auch Markierungen mit digital codierten Informationen, wobei die Informationen während einer Bearbeitung ausgelesen und für die Steuerung der Bearbeitung verwendet werden können. Die Markierungen sind als zweidimensionale Felder insbesondere nach Art eines QR-Codes ausgebildet. Unabhängig von diesen Markierungen ist auf der Materialbahn eine durchgehende Steuerlinie vorgesehen, deren Position relativ zu den Druckbildern definiert ist und die bei der Verarbeitung der Materialbahn als Positionshilfe dient.

DE 102 24 372 A1 beschreibt eine Vorrichtung zur Aufbringung von Codestrukturen mittels eines Laserstrahls auf eine Materialbahn. Diese Codestrukturen übernehmen keine Funktion einer seitlichen Positionskontrolle im Zuge einer Bearbeitung der Materialbahn.

DE 101 01 860 C1 beschreibt eine Vorrichtung zur Aufbringung einer Linie mittels eines Laserstrahls auf eine Materialbahn. Die Linie kann Unterbrechungen aufweisen, um insgesamt drei verschiedene Anweisungen während der Bearbeitung der Materialbahn zu kodieren. Eine seitliche Positionskontrolle wird durch eine zusätzliche, nicht unterbrochene Steuerlinie ermöglicht.

Es ist die Aufgabe der Erfindung, eine Vorrichtung zur Bearbeitung einer Materialbahn anzugeben, bei der eine flexible Steuerung und ein geringer Materialausschuss ermöglicht sind.

### Zusammenfassung der Erfindung

Diese Aufgabe wird für eine eingangs genannte Vorrichtung erfindungsgemäß mit den kennzeichnenden Merkmalen des Anspruchs 1 gelöst.

Durch die Einbringung der digitalen Codestruktur in die Steuerlinie selbst wird erreicht, dass lokale bzw. zeitlich aufgelöste Informationen zu der Materialbahn bereitgestellt werden, ohne dass zusätzliche Flächenbereiche der Materialbahn hierfür verbraucht werden. Zugleich kann die Steuerlinie ihre Funktion der seitlichen Ausrichtung bzw. seitlichen Positionskontrolle bei der Bearbeitung der Materialbahn beibehalten.

Eine Steuerlinie im Sinne der Erfindung ist jede lineare Struktur die funktionell einer Führung und/oder seitlichen Positionskontrolle im Zuge der Bearbeitung oder Verarbeitung der Materialbahn dient. Bevorzugt ist die Steuerlinie durchgehend gedruckt und nur im Bereich der Codestruktur durch Lücken unterbrochen. Zur Einsparung von Druckfarbe muss die Steuerlinie aber nicht durchgängig gedruckt sein. Zum Beispiel kann die Steuerlinie regelmäßig unterbrochen gedruckt sein oder auch über einen längeren Abschnitt ganz fehlen. Bei einem möglichen Ausführungsbeispiel kann die Steuerlinie in diesem Sinne auch nur aus Abschnitten mit digitaler Codestruktur bestehen. Auch eine solche Steuerlinie kann einer seitlichen Positionskontrolle bzw. Ausrichtung dienen.

Ein Druckbild ist bevorzugt bzw. im engeren Sinne eine dem Design bzw. der optischen Oberflächengestaltung dienende Struktur oder definierte Fläche aus einer oder mehreren Druckfarben. Im Sinne der Erfindung umfasst das Druckbild je nach Gegebenheiten aber auch Steuermarken oder sonstige Strukturen wie Ränder etc. aus Druckfarbe, die nicht oder nicht nur dem Design dienen.

Unter einer Materialbahn wird im Sinne der Erfindung eine dünne Bahn aus einem Papier, Kunststofffolie, Metallfolie, Fasergewebe, mehrschichtigem Verbundmaterial oder sonstigem Material verstanden. Die Materialbahn hat eine typische, aber nicht notwendige, Breite von mehreren Metern. Eine Dicke der Materialbahn beträgt meist, aber nicht notwendig, weniger als 1 mm. Die Länge einer ununterbrochenen Materialbahn überschreitet zumeist 100 m und umfasst typische Längen von mehreren Kilometern.

Insbesondere betrifft die Erfindung bedruckte Materialbahnen, die in einem Bearbeitungsvorgang mit Kartonage, bevorzugt Wellpappe, flächig verbunden werden. Nach einem Zuschneiden der so mit der Materialbahn beschichteten Kartonage wird eine individuell bedruckte Verpackung erhalten. Entsprechend sind die auf der Materialbahn vorhandenen Druckbilder bevorzugt wiederholend. Die Wiederholungslänge eines solchen Druckbildes auf der Materialbahn wird als Rapportlänge bezeichnet.

Gemäß der Erfindung ist die digitale Codestruktur bevorzugt in eindimensionaler Form in der Steuerlinie enthalten, so dass nur in der Längsrichtung eine Strukturänderung der Steuerlinie vorliegt. Bei möglichen Weiterbildungen der Erfindung kann die Steuerlinie aber auch in der Querrichtung zusätzlich strukturiert sein. Zum Beispiel kann die Steuerlinie mehrere parallele, benachbarte Linien umfassen, die jeweils eine Codestruktur aufweisen.

Eine digitale Codestruktur kann im Sinne der Erfindung bevorzugt eine zweiwertige bzw. binäre Information sein. Dies kann zum Beispiel durch die Zustände "Steuerlinie vorhanden" und "Steuerlinie nicht vorhanden / unterbrochen" dargestellt werden. Es kann sich aber auch um zwei verschiedene Druckintensitäten oder auch Druckfarben der Steuerlinie zur Erzeugung einer Codestruktur handeln. Alternativ ist es auch denkbar, über mehr als zwei Helligkeitswerte und/ oder Farben eine mehrwertige (mehr als binär) digitale Information in der Steuerlinie zu kodieren.

Insbesondere kann eine digitale Codestruktur im Sinne der Erfindung auch eine Mehrzahl diskreter Zeichen umfassen. Allgemein vorteilhaft kann es sich dabei um eine menschenlesbare Information in einer Klarschrift handeln. Zum Beispiel kann die Klarschrift bzw. menschenlesbare Information die Zeichen eines Alphabets, bevorzugt des lateinischen Alphabets, und/oder die arabischen Ziffern 0-9 umfassen.

Grundsätzlich ist zu verstehen, dass eine solche menschenlesbare Klarschrift mit entsprechenden Sensoren und Programmen (OCR = Optical Character Recognition) auch maschinell auslesbar ist. Ebenso grundsätzlich ist zu verstehen, dass Menschen im Prinzip auch binär codierte Informationen lesen könnten, dies aber im Regelfall nicht praktikabel ist. Unter einer "menschenlesbaren Klarschrift" wird daher im vorliegenden Sinne jede Codierung verstanden, die für eine schnelle und effektive Aufnahme durch einen Menschen optimiert ist, wie zum Beispiel herkömmliche menschliche Schriftsysteme.

Allgemein kann eine digitale Codestruktur im Sinne der Erfindung mehrere Arten von digitaler Codierung zugleich umfassen. Insbesondere kann es sich dabei um binär codierte Informationen und in einer Klarschrift codierte Informationen handeln.

Der minimale Informationsgehalt von vier Bit, also 16 Zuständen, reicht nur für einfache Kontrollaufgaben. Bevorzugt sind wenigstens ein Byte, noch bevorzugter wenigstens zwei Byte, also 65536 Zustände, in dem Datensatz codiert. Noch vorteilhafter sind wenigstens vier Byte und besonders vorteilhaft wenigstens 6 Byte (=48 Bit) in dem Datensatz codiert.

Erfindungsgemäß wird die Steuerlinie durch Aufbringung von Farbe mittels eines Druckwerks auf die Materialbahn aufgebracht. Bevorzugt erfolgt die Aufbringung dabei in demselben Bearbeitungsschritt wie eine Aufbringung des Druckbildes. Dies erlaubt insgesamt eine einfache Bereitstellung der Steuerlinie. Bevorzugt wird dabei eine feste relative Positionierung der Steuerlinie zu dem insbesondere aus Farbe bestehenden Druckbild ermöglicht.

Je nach Anforderungen kann die Steuerlinie mittels desselben Druckwerks wie das Druckbild aufgebracht werden, um die Anzahl der Komponenten zu reduzieren. Alternativ hierzu kann die Steuerlinie auch mittels eines eigenen bzw. separaten Druckwerks aufgebracht werden, um ein die Druckbilder aufbringendes Druckwerk zu schonen.

Allgemein vorteilhaft kann es vorgesehen sein, dass zumindest eine zweite in der Längsrichtung verlaufende Steuerlinie in einem anderen Bereich der Materialbahn angeordnet ist. Auf diese Weise kann ein Verzug der Materialbahn in der Querrichtung während der Bearbeitung detektiert werden. Insbesondere kann auch die zweite Steuerlinie ganz analog zu der ersten Steuerlinie eine digitale Codestruktur aufweisen.

Bei einer bevorzugten Weiterbildung sind dabei die zwei Steuerlinien verschiedenen Druckaufträgen auf derselben Materialbahn zugeordnet. So können zum Beispiel mehrere verschiedene Druckaufträge nebeneinander benachbart auf derselben Materialbahn vorgesehen sein. Die Druckaufträge können insbesondere verschiedene Druckbilder mit verschiedenen Rapportlängen aufweisen. Der Betrieb mit mehreren Druckaufträgen nebeneinander wird auch als Duallane- oder Multilane-Betrieb bezeichnet.

In besonders bevorzugter Weiterbildung der Erfindung ist dabei die Steuerlinie in einem ersten Randbereich der Materialbahn angeordnet, wobei die zweite Steuerlinie in einem in Querrichtung gegenüberliegenden, zweiten Randbereich der Materialbahn angeordnet ist. Dies erlaubt mittels entsprechenden Einsatzes von Sensoren eine Kontrolle des Abstandes der Steuerlinien und somit der Ränder der Materialbahn. Hierdurch können zum Beispiel Schneidmesserpositionen oder Ähnliches auch in einem Duallane- oder Multilane-Betrieb optimal korrigiert werden.

Allgemein vorteilhaft ist es vorgesehen, dass die Codestruktur Lücken der Steuerlinie umfasst, wobei eine Länge jeder der Lücken einen Maximalwert nicht überschreitet. Im Interesse einer sicheren Funktion der Steuerlinie zur Ausrichtung der Anlage ist die maximale Größe einer Lücke in Relation zu einer Auflösung der Abtastung durch den Sensor vorgegeben. Eine typische maximale Größe einer Lücke kann zum Beispiel 9 mm betragen. Dabei kann eine kleinste sicher durch den Sensor detektierte Längeneinheit zum Beispiel 3mm betragen, was als Block oder auch minimale Länge eines Merkmals definiert ist. Somit beträgt die maximale Länge einer Lücke in einer erfindungsgemäßen Codestruktur drei Blocks.

Bevorzugt werden durch die Lücken Codesegmente der Steuerlinie definiert, wobei wenigstens zwei, insbesondere wenigstens vier verschiedene diskrete Längen der Codesegmente vorgesehen sind, die einer digitalen Information von wenigstens zwei, insbesondere wenigstens vier verschiedenen Werten je Codesegment entsprechen. Auf diese Weise wird ein Anteil an Lücken bzw. nicht bedruckten Bereichen der Steuerlinie besonders gering gehalten, so dass die Führungsfunktion der Steuerlinie unabhängig von dem Dateninhalt der Codestruktur sichergestellt ist. Zum Beispiel können die Codesegmente die Längen 2 Blöcke, 3 Blöcke, 4 Blöcke oder 5 Blöcke aufweisen, was zum Beispiel den Dezimalzahlen 1 bis 4 oder auch den Dualzahlen 00, 01, 10 und 11 zugeordnet ist. Je nach Auflösung des Sensors können auch andere Systeme einer Übersetzung von Codesegmenten verschiedener Längen in digitale Werte definiert sein.

Besonders bevorzugt ist dabei vorgesehen, dass der Datensatz eine Menge an aufeinander folgenden Lücken und Codesegmenten umfasst, wobei insbesondere der Datensatz eine von der codierten Information abhängige Länge in der Längsrichtung aufweist, wobei die Länge eine definierte Maximallänge nicht überschreitet. Somit kann zum Beispiel jedem Druckbild ein eigener Datensatz zugeordnet werden, der insbesondere auf derselben Position relativ zu dem Druckbild in der Steuerlinie codiert ist. Zur Sicherstellung einer solchen Zuordnung muss lediglich die theoretische Maximallänge des Datensatzes kleiner als die Rapportlänge des Druckbildes sein.

Bei einer besonders vorteilhaften Ausführungsform der Erfindung umfasst die Vorrichtung eine Wellpappenanlage, wobei bevorzugt Steuerungsinformationen für die Wellpappenanlage in den Datensätzen der Materialbahn enthalten sind. Mögliche Information in den Datensätzen sind zum Beispiel Rollen-ID der Materialbahn, Auftragsnummer des Druckauftrags, fortlaufende Nummern der Druckbilder, Meterzähler der Länge der Materialbahn, Auftragsmenge, Rapportlänge oder Ähnliches. Da die Steuerlinie bevorzugt zugleich oder unmittelbar nach den Druckbildern aufgebracht wird, können insbesondere auch Echtzeitdaten über Fehlstellen und Ausschüsse mitkodiert werden. Zum Beispiel sind solche Informationen hilfreich, wenn in einzelnen Abschnitten der Materialbahn Probleme mit dem Auftrag der Druckbilder aufgetreten sind.

Durch die erfindungsgemäße Steuerlinie können Fehlstellen der Materialbahn in einer Wellpappenanlage ganz analog zur Verwendung eines digitalen Rollenprotokolls aussortiert werden. Die Verwendung eines digitalen Rollenprotokolls kann bei Bedarf ergänzend zu einer erfindungsgemäßen Codestruktur der Steuerlinie verwendet werden.

Allgemein vorteilhaft kann die Materialbahn als eine digital vorbedruckte Rolle einer digitalen Druckmaschine ausgebildet sein. Moderne digitale Druckmaschinen, zum Beispiel das Modell Hewlett Packard HP T1100S, können besonders flexible Druckaufträge auf eine Materialbahn aufbringen. Solche Maschinen erzeugen insbesondere digitale Rollenprotokolle über die erzeugte Materialbahn. Sowohl in Querrichtung als auch in Längsrichtung können mehrere verschiedene Druckaufträge vorliegen. Besonders bevorzugt ist es dabei vorgesehen, dass die Materialbahn zumindest zwei verschiedene, nebeneinander angeordnete und in der Längsrichtung wiederholte Druckbilder aufweist, wobei insbesondere die Druckbilder in der Längsrichtung unterschiedliche Rapportlängen aufweisen.

Die hohe Flexibilität erlaubt es im Prinzip sogar, in der Längsrichtung keine wiederholten Druckbilder, sondern völlig verschiedene Druckbilder mit unterschiedlichen Rapportlängen aufzubringen. Eine erfindungsgemäße Codierung mittels der Steuerlinie ermöglicht eine Zuordnung j edes der Druckbilder zu einem jeweiligen Datensatz.

Allgemein vorteilhaft erlaubt die erfindungsgemäße Kombination der Materialbahn mit den Datensätzen in der Steuerlinie, dass zumindest wesentliche Daten, die zum Beispiel in einem Rollenprotokoll einer digitalen Druckmaschine enthalten sind, auf der Materialbahn aufgedruckt sind. Die Erfindung erlaubt zudem eine einfache Aufrüstung bestehender Wellpappenanlagen. Dabei können zum Beispiel die Preprints bzw. Materialbahnen extern hergestellt werden. Die Verarbeitung zu Wellpappestücken bzw. Verpackungen erfolgt dann unter Zuhilfenahme der ausgelesenen Daten der Steuerlinie. Hierfür muss lediglich der (die) Sensor(en) einer bestehenden Anlage entsprechend angepasst und mit einer Prozesssteuerung gekoppelt werden.

Bei einer vorteilhaften Ausführungsform der Erfindung beträgt eine Breite der Steuerlinie weniger als 4 mm, wobei zu jeder Seite der Steuerlinie ein Freiraum mit einer Breite von weniger als 4 mm vorgesehen ist. Besonders bevorzugt beträgt die Breite der Steuerlinie etwa 3 mm mit seitlichen Freiräumen von ebenfalls jeweils 3 mm. Eine solche Dimensionierung spart insgesamt Verschnitt und optimiert die Nutzfläche der Materialbahn. Um solch schmale Steuerlinien zu realisieren, beträgt eine optische Auflösung der Sensoren zweckmäßig nicht mehr als 0,25 mm, insbesondere sowohl in Längsrichtung als auch in Querrichtung. Weiterhin vorteilhaft sind seitlich neben der Steuerlinie Schnittmarken aufgedruckt, wobei die Schnittmarken als Steuersignal für ein Schneidwerk auslesbar sind. Hierbei handelt es sich um ein analoges Signal, dessen Position möglichst genau zu dem Druckbild korreliert ist. Seitlich neben der Steuerlinie vorragende Schnittmarken erhöhen die Prozesssicherheit und die Genauigkeit des Schnitts. Alternativ hierzu könnte auch die Codestruktur der Steuerlinie selbst als Schnittmarke dienen. Vorteilhaft werden die Schnittmarken mit demselben Sensor ausgelesen wie die Codestruktur der Steuerlinie.

Der Datensatz enthält bevorzugt eine oder mehrere Informationen, ausgewählt aus der Gruppe fortlaufende Nummerierung des Druckbildes, Identifizierung eines Druckauftrags, Information über einen Auftragswechsel oder Information über Fehlstellen.

Bei einer allgemein bevorzugten Realisierung der Erfindung nimmt der Sensor ein zweidimensionales digitales Bild der Steuerlinie auf, wobei das Bild elektronisch ausgewertet wird. Dies kann zum Beispiel mittels einer üblichen CCD-Kamera erfolgen, die zumindest von dem relevanten Bereich der durchlaufenden Materialbahn als Zeilenkamera ein quasiunendliches 2-D-Bild aufnimmt. Diese digitalen Bilder können dann sowohl hinsichtlich der Position bzw. Steuerungs-/Kontrollfunktion der Steuerlinie als auch bezüglich der digitalen Information der Codestruktur ausgewertet werden.

Allgemein vorteilhaft ist die Codestruktur bidirektional auslesbar ausgebildet. Dies erlaubt eine Auslesung insbesondere auch dann, wenn die Materialbahn in etwaigen Zwischenschritten sowohl in die eine als auch in die andere Richtung abgerollt wird. Eine solche bidirektionale Auslesbarkeit ist ideal mit einer zweidimensionalen Bildaufnahme der Steuerlinie kombinierbar.

Bei einer weiteren bevorzugten Ausführungsform der Erfindung ist zusätzlich zu der digitalen Codestruktur eine menschenlesbare Information in einer Klarschrift auf der Materialbahn aufgebracht. Bevorzugt, aber nicht notwendig ist dabei die menschenlesbare Information mit dem Informationsgehalt der Codestruktur korreliert. So kann zum Beispiel zumindest ein Teil der Information einer binären digitalen Codestruktur in Klarschrift wiederholt aufgebracht sein. Selbst in hochautomatisierten Fertigungsprozessen kann es situationsbedingt erforderlich sein manuell einzugreifen oder zu kontrollieren. Für den Eingreifenden ist es dann ein Vorteil, wenn durch einfaches Lesen der Klarschrift eine integrierte Information erfasst werden kann.

Allgemein bevorzugt wird die menschenlesbare Information in Klarschrift in demselben Arbeitsgang wie die übrige Steuerlinie aufgebracht. Insbesondere kann das Aufbringen der Klarschrift durch Aufbringung von Farbe mittels eines Druckwerks auf die Materialbahn erfolgen.

Bei einer besonders bevorzugten Detailgestaltung ist dabei die Klarschrift deckungsgleich mit der Steuerlinie positioniert. So kann zum Beispiel ein durchlaufender Teil der Steuerlinie bzw. ein Teil ohne binäre oder sonstige Codierung genutzt werden, die Klarschrift raumsparend vorzusehen. Besonders bei großen Breiten der Steuerlinie von mehreren Millimetern, zum Beispiel 5 mm, ist zugleich eine besonders gute Lesbarkeit durch einen Menschen gegeben. Erfindungsgemäß bevorzugte Breiten der Steuerlinie bei Kombination mit menschenlesbarer Klarschrift liegen im Bereich 3 mm bis 8 mm, besonders bevorzugt 4 mm bis 6 mm.

Bei einer hierzu alternativen oder ergänzenden Ausführungsform kann die Klarschrift außerhalb der Steuerlinie positioniert sein. Bevorzugt kann dies auch innerhalb des Druckbildes erfolgen.

Bei einer alternativen Ausführungsform der Erfindung umfasst die digitale Codestruktur eine menschenlesbare Information in einer Klarschrift, wobei bevorzugt die digitale Information ausschließlich aus der Klarschrift besteht. Eine solche Codestruktur erlaubt eine raumsparende Anordnung bei zugleich gegebener Lesbarkeit durch einen Menschen. Eine maschinelle Lesbarkeit kann zudem durch geeignete Sensoren und Programme (OCR-Systeme) vorgesehen werden.

Allgemein vorteilhaft umfasst die Klarschrift alphanumerische Zeichen, bevorzugt lateinische Buchstaben und/oder arabische Ziffern. Wenn es sich bei der Klarschrift beispielhaft um alphanumerische lateinische Buchstaben und arabische Ziffern handelt, liegend wenigstens 36 verschiedene Zeichen vor. Ein einzelnes Zeichen codiert somit bereits einen Informationsgehalt von mehr als fünf Bit. Mit vier dieser Zeichen (36^{∗}36^{∗}36^{∗}36 = 1679616 Kombinationen) ist ein Informationsgehalt von mehr als zwei Byte codierbar.

Die Aufgabe der Erfindung wird zudem gelöst durch eine Materialbahn, bevorzugt zur Bearbeitung mit einer erfindungsgemäßen Vorrichtung, wobei auf der Materialbahn sowohl ein aufgebrachtes, insbesondere wiederholtes Druckbild als auch eine in der Längsrichtung erstreckte Steuerlinie ausgebildet ist, und wobei die Steuerlinie eine definierte Position in einer Querrichtung der Materialbahn aufweist, und wobei die Steuerlinie eine digitale Codestruktur in Ihrer Längsrichtung aufweist, wobei die Codestruktur einen Datensatz von wenigstens vier Bit, insbesondere wenigstens zwei Byte, Informationsgehalt codiert.

Eine erfindungsgemäße Materialbahn dient insbesondere vorteilhaft als bedruckte Oberfläche für die Herstellung von Kartonage bzw. Wellpappe.

Die Aufgabe der Erfindung wird zudem gelöst durch eine Kartonage, bevorzugt Wellpappe, hergestellt durch Aufbringen einer erfindungsgemäßen Materialbahn auf einen Träger und Zuschnitt des Trägers in Verbindung mit einer Detektion der Steuerlinie.

Die Aufgabe der Erfindung wird zudem für ein eingangs genanntes Verfahren zur Bearbeitung einer Materialbahn mit den kennzeichnenden Merkmalen des Anspruchs 14 gelöst.

Bevorzugt wird das erfindungsgemäße Verfahren mittels einer Vorrichtung nach einem der Ansprüche 1 bis 11 durchgeführt.

Weitere Vorteile und Merkmale der Erfindung ergeben sich aus den nachfolgend beschriebenen Ausführungsbeispielen sowie aus den abhängigen Ansprüchen.

Nachfolgend werden vier bevorzugte Ausführungsbeispiele der Erfindung beschrieben und anhand der anliegenden Zeichnungen näher erläutert.

### Kurzbeschreibung der Figuren

**Fig. 1** zeigt eine schematische Ansicht einer erfindungsgemäßen Vorrichtung von der Seite.
**Fig. 2** zeigt eine schematische räumliche Ansicht einer erfindungsgemäßen Materialbahn mit darüber angeordneten Sensoren.
**Fig. 3** zeigt eine Draufsicht auf eine Detailvergrößerung der Materialbahn aus Fig. 2.
**Fig. 4** zeigt eine Darstellung eines Abschnitts einer Steuerlinie einer erfindungsgemäßen Materialbahn mit einer Codestruktur.
**Fig. 5** zeigt ein zweites Ausführungsbeispiel der Erfindung, bei dem eine Steuerlinie zusätzliche Information in menschenlesbarer Klarschrift enthält.
**Fig. 6** zeigt ein drittes Ausführungsbeispiel der Erfindung, bei dem außerhalb einer Steuerlinie zusätzliche Information in menschenlesbarer Klarschrift vorgesehen ist.
**Fig. 7** zeigt ein viertes Ausführungsbeispiel der Erfindung, bei dem eine Steuerlinie ausschließlich Information in menschenlesbarer Klarschrift enthält.

### Ausführliche Beschreibung

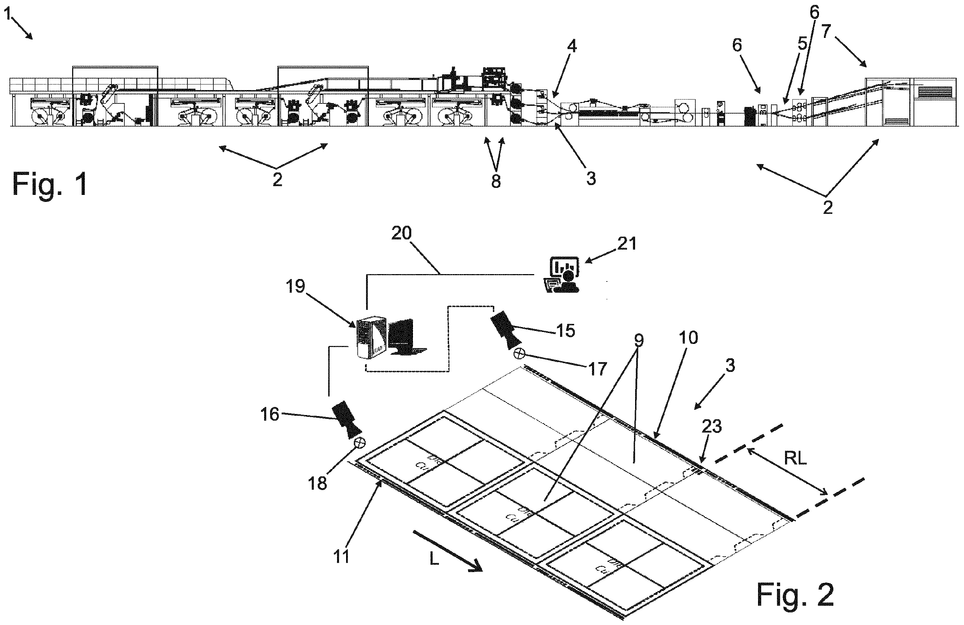

Die in **Fig. 1** gezeigte Vorrichtung ist eine Wellpappenanlage (WPA) 1, die mehrere Stationen 2 zur Zuführung, Beförderung und Bearbeitung von Material aufweist. Dabei wird eine obere, bedruckte Materialbahn 3 flächig auf andere Bahnen 4 als Träger aufgebracht und so zu einer bedruckten Wellpappe 5 vereinigt.

Nach der Vereinigung wird die Bahn aus bedruckter Wellpappe 5 in einer Schneidstation 6 in einzelne Kartonagen bzw. Wellpappenstücke bzw. Verpackungen zugeschnitten, die in einer Ablagestation 7 gestapelt werden.

Die bedruckte Materialbahn 3 wird bei vorliegend bevorzugtem Ablauf auf einer externen Druckmaschine (nicht dargestellt) hergestellt. Es werden also bereits vorbedruckte Rollen an die WPA angeliefert und eingespannt.

Alternativ kann der Druck der Materialbahn 3 auch unmittelbar während der Herstellung der Wellpappe mittels einer insbesondere digitalen Druckmaschine 8 erfolgen. Eine solche integrierte Druckmaschine ist im Einzelnen nicht dargestellt, würde aber im Bereich des Bezugszeichens 8 in einer Anlage gemäß Fig. 1 angeordnet sein.

Unabhängig von der Art der Herstellung der Materialbahn 3 sind auf dieser Druckbilder 9 aufgebracht. Die Druckbilder 9 werden in einer Rapportlänge RL in einer Längsrichtung L der Materialbahn 3 wiederholt.

Auf jeder Seite der Materialbahn ist eine Steuerlinie 10, 11 ausgebildet. Die Steuerlinien 10, 11 werden mittels Druckfarbe durch die Druckmaschine 8 auf die Materialbahn 3 aufgebracht. Die Steuerlinien 10, 11 befinden sich in jeweils einem Randbereich der Materialbahn 3, wobei die Randbereiche in einer Querrichtung gegenüberliegend sind.

Jede der Steuerlinien 10, 11 hat eine Breite B von 3 mm. Auf zumindest einer Seite jeder der Steuerlinien ist jeweils ein freier, nicht bedruckter Bereich von wenigstens 3 mm Breite vorgesehen. Somit beansprucht jede der Steuerlinien 10, 11 einen randseitigen Streifen von 6 mm Breite auf der Materialbahn 3.

Die Steuerlinien 10, 11 weisen jeweils Codestrukturen 12 auf, die insgesamt durch Lücken 13 bzw. nicht bedruckte Bereiche sowie zwischen den Lücken 13 erstreckte Codesegmente 14 ausgebildet werden.

Die Steuerlinien 10, 11 werden vorliegend von jeweils einem separaten Sensor 15, 16 optisch erfasst. Hierzu ist neben Sensoren 15, 16 eine definierte Beleuchtung 17, 18 der Steuerlinien 10, 11 über der Materialbahn 3 vorgesehen. Die Sensoren 15, 16 sind mit einem Steuerrechner 19 verbunden, der die Signale der Sensoren auswertet. Der Steuerrechner 19 ist seinerseits über eine Schnittstelle 20 mit einem Prozessleitsystem 21 der WPA verbunden.

Vorliegend sind die Sensoren 15, 16 jeweils als eine CCD-Kamera in Form einer Zeilenkamera ausgebildet. Die Zeilenkamera scannt getriggert über ein Geschwindigkeitssignal Zeile für Zeile. Dadurch entsteht ein "endloses 2D Bild" der Steuerlinien 10, 11. Die Bilder werden elektronisch durch den Steuerrechner 19 ausgewertet. Algorithmen extrahieren die darin enthaltenen Daten in zusammenhängende Codesequenzen und werten deren Inhalte aus.

Dabei ist die Codestruktur bidirektional auslesbar gestaltet, so dass die Erkennung der Information unabhängig von der Orientierung der Bildaufnahme und/oder eine Durchlaufrichtung der Materialbahn 3 erfolgt.

Durch ein Verfolgen der Steuerlinien 10, 11 und ein Auslesen der Codestrukturen 12 kann die Bearbeitung der Materialbahn zu fertig geschnittenen Kartonagen bzw. Wellpappenstücken gesteuert und überwacht werden.

Die im Stand der Technik bisher eingesetzten Sensoren (Scanner) werden in der Auflösung vorliegend um den Faktor 4 verbessert, und die Abtastgeschwindigkeit wird ebenfalls mehr als verdoppelt. Damit sind die Anforderungen an die aufgedruckte Steuerlinie neu zu bewerten. Betrug im Stand der Technik die Auflösung der Linienbreite durch den Sensor ca. 1 mm, so wird erfindungsgemäße mit 0,25mm aufgelöst.

Die Steuerlinien 10, 11 bestehen neben den Codestrukturen 12 aus durchgängig bzw. gleichförmig gedruckten Abschnitten von im Prinzip beliebiger bzw. quasi-unendlicher Länge. Diese Abschnitte dienen allein zur seitlichen Positionskontrolle der Materialbahn nach Art eines analogen Steuersignals. Durch die Anordnung der zwei Steuerlinien an den gegenüberliegenden Rändern der Materialbahn kann insbesondere eine Veränderung der Breite der Materialbahn genau kontrolliert werden. Solche Breitenänderungen durch äußere Einflüsse stellen eine mögliche Fehlerquelle bei der Produktion von Wellpappe dar.

Der Aufbau der Codestrukturen 12 ist vorliegend wie folgt:
Die Lücken 13 der Steuerlinien erstrecken sich über die gesamte Breite der Steuerlinie 10, 11. Sie haben in der Längsrichtung L eine minimale Länge von 3 mm. Die minimale Länge eines Merkmals, sei es eine Lücke oder ein bedruckter Abschnitt, beträgt vorliegend 3 mm und wird als ein Block bezeichnet. Je nach Auflösung der Sensoren 15, 16 kann eine Breite der Steuerlinie oder eine Länge eines Blocks auch andere Werte annehmen.

Das Ende eines quasi-unendlichen Abschnitts der Steuerlinie 10, 11 wird jeweils durch eine Lücke 13 von drei Blöcken Länge eingeleitet. Aus Gründen der Redundanz folgt darauf jeweils eine gedruckte Indexmarke 22 von einem Block Länge. Die Indexmarke 22 dient als Startcode und gibt auch die Leserichtung vor.

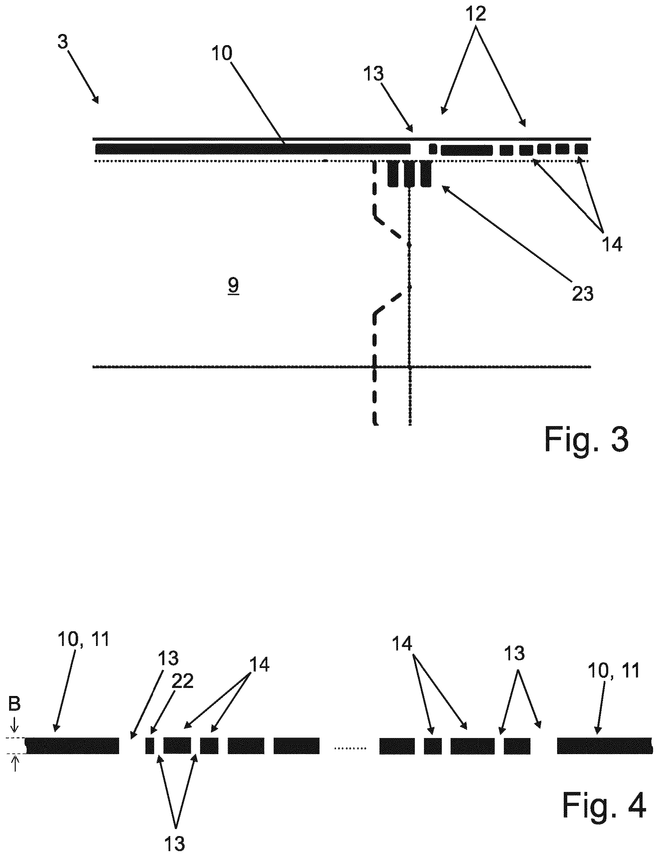

Hierdurch wurde dem Steuerrechner 19 zuverlässig mitgeteilt, dass nun eine Sequenz folgt, die mit Dateninhalt versehen ist (siehe auch Darstellung in **Fig. 4****).**

Die Sequenz bzw. der gesamte Datensatz besteht aus einer Abfolge von Codesegmenten 14. Die Anzahl der Codesegmente 14 pro Datensatz ist vorliegend festgelegt und beträgt 24 Stück. Jedes der Codesegmente 14 ist vom nachfolgenden Codesegment 14 durch eine Lücke 13 der Länge von 3 mm bzw. einem Block abgetrennt.

Ein Codesegment 14 ist als durchgehend gedruckter Abschnitt ausgebildet, der eine von vier möglichen Längen aufweist: zwei Blöcke, drei Blöcke, vier Blöcke oder fünf Blöcke. Diese verschiedenen Codesegmente 14 können z.B. den Binärzahlen 00, 01, 10 und 11 zugeordnet sein, so dass ein Codesegment 14 einen Informationsgehalt von 2 Bit aufweist. Da ein Datensatz vorliegend 24 Codesegmente 14 umfasst, enthält er eine Information von 48 Bit bzw. 6 Byte.

Das Ende des Datensatzes wird wiederum durch eine Lücke 13 von drei Blöcken Länge angezeigt. Vorliegend wird der Begriff Lücke 13 sowohl für die drei Blöcke langen Start- und Endsignale der Codestrukturen 12 verwendet als auch für die nur 1 Block langen Zwischenräume zwischen den Codesegmenten 14. Im Prinzip handelt es sich bei diesen Arten von Lücken aber um verschiedene Segmentarten der Codestruktur. Sowohl bei den bedruckten als auch bei den freien Bereichen der Codestruktur hat die jeweilige Länge des Bereichs eine entsprechende Bedeutung.

Insgesamt kommen in der Codestruktur somit sieben verschiedene Segmentarten vor, die in nachfolgender Tabelle nochmals zusammenfassend dargestellt sind:

| **Name** | **Beschreibung** | **Wert** | **Länge** | **Länge [mm]** | **Modul** |
|---|---|---|---|---|---|
| Index | Startsignal, bedruckt | | 1 Block | 3 | 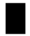 |
| Codeseg. 0 | Datenwert | 00 | 2 Blöcke | 6 | 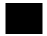 |
| Codeseg. 1 | Datenwert | 01 | 3 Blöcke | 9 | 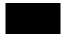 |
| Codeseg. 2 | Datenwert | 10 | 4 Blöcke | 12 | 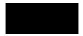 |
| Codeseg. 3 | Datenwert | 11 | 5 Blöcke | 15 | 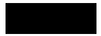 |
| Lücke | unbedruckte Länge zwischen Codesegmenten | | 1 Block | 3 | 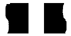 |
| Startlücke | unbedruckte Lückezu Beginn und Ende des Datensatzes | | 3 Blöcke | 9 | 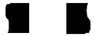 |

Die absolute Länge eines Datensatzes ist abhängig von dem darzustellenden Informationsgehalt (237mm - 453 mm). Der Aufbau des Codes ermöglicht eine bidirektionale Decodierung (Vorwärts- und Rückwärtslesen).

In **Fig. 4** ist ein Datensatz der Steuerlinie 10 beispielhaft verkürzt dargestellt. Dabei erfolgt, in der Zeichnung von links nach rechts betrachtet, zunächst eine drei Blöcke breite Lücke 13, gefolgt von der ein Block breiten Indexmarke 22. Daran schließen sich die ersten vier Codesegmente 14 verschiedener Länge an, also die Informationsbits 0 bis 7.

Aufgrund der verkürzten Darstellung sind nachfolgend noch die letzten vier Codesegmente dargestellt, also die Informationsbits 40 bis 47. Danach folgt die endseitige Lücke 13 von 9 mm bzw. 3 Blocks Länge. Nachfolgend schließt sich wieder ein quasi-unendlicher Abschnitt der Steuerlinie 10 an.

Für die Ansteuerung eines Querschneiders bzw. Schneidwerks der WPA werden bereits während des Druckvorgangs spezielle Schnittmarken 23 mitgedruckt. Diese Schnittmarken 23 werden unmittelbar vor einer Messerwelle an der WPA mit einer entsprechenden Sensorik ausgelesen.

Die Schnittmarke 23 kann in die Steuerlinie integriert werden bzw. wird an die Innenseite der Steuerlinie 10, 11 angedruckt, siehe **Fig. 3****.** Die Steuerlinie 10, 11 mit der Codestruktur wird im Randbeschnitt entfernt, die Schnittmarke 23 bleibt stehen und kann das Schneidmesser quer zur Bahn steuern.

Üblicherweise werden die einzelnen Datensätze der Codestruktur und die Schnittmarken 23 immer pro Rapport gedruckt. Durch die Integration in die Steuerlinie 10 können die Schnittmarken 23 ebenfalls von denselben Sensoren (Scannern) 15, 16 an der WPA erfasst werden. Dadurch ergibt sich eine redundante Auswertung.

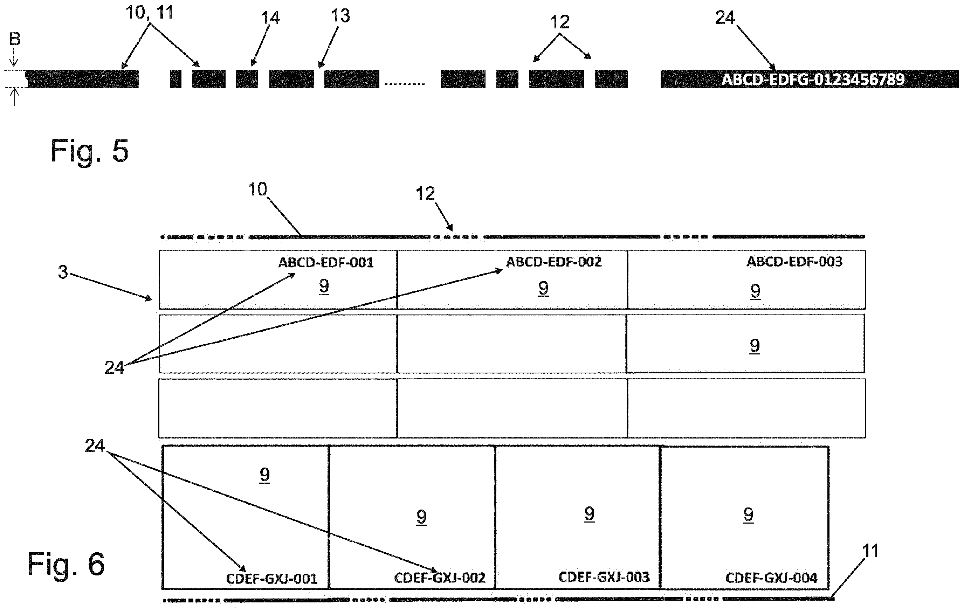

Bei dem in **Fig. 5** gezeigten, zweiten Ausführungsbeispiel der Erfindung ist zusätzlich zu der digitalen Codestruktur 12 eine menschenlesbare Information in einer Klarschrift 24 auf der Materialbahn 3 aufgebracht. Die menschenlesbare Information 24 ist mit dem Informationsgehalt der Codestruktur korreliert. Zumindest ein Teil der Information der binären digitalen Codestruktur 12 ist in der Klarschrift 24 wiederholt auf der Materialbahn 3 aufgebracht.

Die Klarschrift 24 umfasst alphanumerische Zeichen, vorliegend lateinische Buchstaben und arabische Ziffern.

Das zweite Ausführungsbeispiel unterscheidet sich nur durch die zusätzliche Klarschrift 24 und eine etwas größere Breite der Steuerlinie von dem ersten Ausführungsbeispiel, so dass bezüglich der weiteren Eigenschaften, insbesondere der binären Codestruktur 12, auf das erste Beispiel verwiesen wird.

Selbst in hochautomatisierten Fertigungsprozessen kann es situationsbedingt erforderlich sein manuell einzugreifen oder zu kontrollieren. Für den Eingreifenden ist es dann ein Vorteil, wenn durch einfaches Lesen der Klarschrift eine integrierte Information erfasst werden kann.

Bei dem Ausführungsbeispiel nach **Fig. 5** ist dabei die Klarschrift 24 deckungsgleich mit der Steuerlinie 10, 11 positioniert. Dabei wird der im ersten Ausführungsbeispiel beschriebene, quasi-unendliche Abschnitt der Steuerlinie 10, 11 als durchlaufender Teil der Steuerlinie 10, 11 ohne binäre oder sonstige Codierung genutzt, um die Klarschrift 24 raumsparend vorzusehen. Die Klarschrift 24 ist vorliegend als inverser Druck, also als Auslassung innerhalb der vollflächig gedruckten Steuerlinie, ausgebildet. Somit bleiben ausreichende durchgehende Ränder der Steuerlinie, um ein fehlerhaftes Interpretieren der Klarschrift 24 als binäre Codestruktur 12 auszuschließen.

Besonders bei großen Breiten B der Steuerlinie 10, 11 von mehreren Millimetern, im vorliegenden Beispiel 5 mm, ist zugleich eine besonders gute Lesbarkeit durch einen Menschen gegeben. Erfindungsgemäß bevorzugte Breiten der Steuerlinie 10, 11 bei Kombination mit menschenlesbarer Klarschrift 24 liegen im Bereich 3 mm bis 8 mm, besonders bevorzugt 4 mm bis 6 mm.

Die menschenlesbare Information in Klarschrift 24 wird in demselben Arbeitsgang wie die übrige Steuerlinie 10, 11 aufgebracht. Das Aufbringen der Klarschrift erfolgt ebenfalls durch Aufbringung von Farbe mittels eines Druckwerks auf die Materialbahn 3, vorliegend durch die Druckmaschine 8.

Bei einem dritten Ausführungsbeispiel der Erfindung gemäß **Fig. 6** ist im Unterschied zu dem zweiten Ausführungsbeispiel die Klarschrift 24 außerhalb der Steuerlinie 10, 11 positioniert. Vorliegend befindet sich die Klarschrift jeweils in einem der Druckbilder 9.

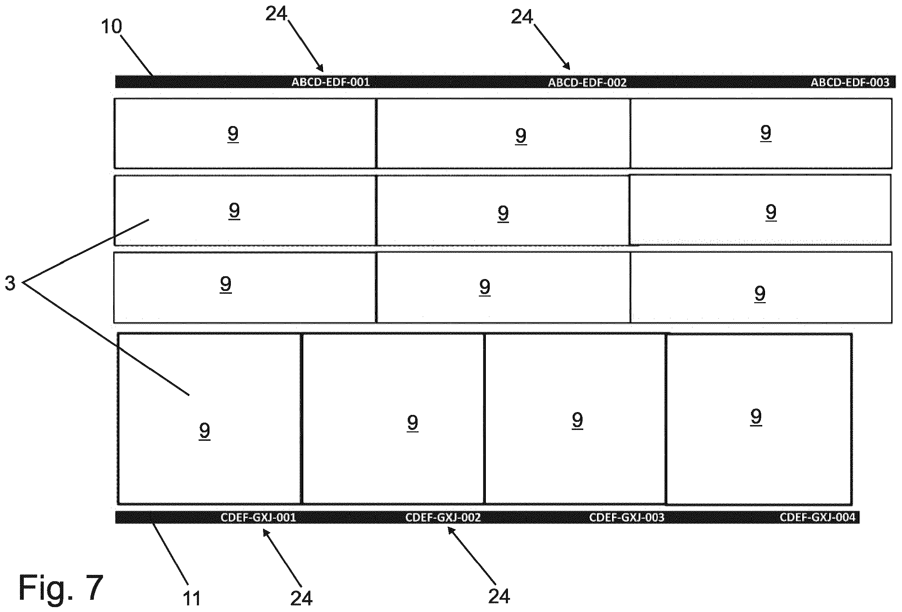

Bei einem vierten Ausführungsbeispiel der Erfindung gemäß **Fig. 7** umfasst die digitale Codestruktur im Sinne der Erfindung eine menschenlesbare Information in einer Klarschrift 24, wobei die digitale Information ausschließlich aus der Klarschrift 24 besteht. Eine solche Codestruktur 24 erlaubt eine raumsparende Anordnung bei zugleich gegebener Lesbarkeit durch einen Menschen. Eine maschinelle Lesbarkeit kann zudem durch geeignete Sensoren 15, 16 und Programme (OCR-Systeme) vorgesehen werden.

Das vierte Ausführungsbeispiel nach **Fig. 7** entspricht, auch hinsichtlich der Breite der Steuerlinien 10, 11, dem zweiten Ausführungsbeispiel nach Fig. 5, wobei aber die binäre Codestruktur 12 nicht vorhanden ist. Die Klarschrift 24 ist deckungsgleich auf jeweils einer der Steuerlinien 10, 11 positioniert.

Anders ausgedrückt handelt es sich bei dem Beispiel nach **Fig. 7** um herkömmliche, durchgängige Steuerlinien 10, 11, auf denen eine digitale Codestruktur in Form der menschenlesbaren Klarschrift 24 gespeichert ist.

Da es sich vorliegend um alphanumerische lateinische Buchstaben und arabische Ziffern handelt, liegend wenigstens 36 verschiedene Zeichen vor. Ein einzelnes Zeichen codiert somit bereits einen Informationsgehalt von mehr als fünf Bit. Mit vier dieser Zeichen (36^{∗}36^{∗}36^{∗}36 = 1679616 Kombinationen) ist ein Informationsgehalt von mehr als zwei Byte codierbar.

### Bezugszeichenliste

1 Wellpappenanlage (WPA)
2 Stationen der WPA
3 Materialbahn
4 weitere Bahnen, Träger für die Materialbahn
5 bedruckte Wellpappe
6 Schneidstation, Schneidwerk der WPA
7 Ablagestation der WPA
8 Druckmaschine der WPA
9 Druckbilder
10 erste Steuerlinie
11 zweite Steuerlinie
12 Codestruktur
13 Lücke
14 Codesegment
15 erster Sensor
16 zweiter Sensor
17 erste Beleuchtung
18 zweite Beleuchtung
19 Steuerrechner
20 Schnittstelle
21 Prozessleitrechner
22 Indexmarke
23 Schnittmarke
24 menschenlesbare Klarschrift, alphanumerische Zeichen
RL Rapportlänge
L Längsrichtung der Materialbahn
B Breite der Steuerlinie

## Patentansprüche

1. Vorrichtung zur Bearbeitung einer Materialbahn (3), umfassend
Mittel (2) zur Beförderung der Materialbahn in einer Längsrichtung (L),
wobei auf der Materialbahn (3) sowohl ein aufgebrachtes, insbesondere wiederholtes Druckbild (9) als auch eine in der Längsrichtung erstreckte Steuerlinie (10, 11) ausgebildet ist,
wobei die Steuerlinie eine lineare Struktur ist, die funktionell einer Führung und/oder seitlichen Positionskontrolle im Zuge der Bearbeitung oder Verarbeitung der Materialbahn dient,
wobei die Steuerlinie (10, 11) eine definierte Position in einer Querrichtung der Materialbahn (3) aufweist, und
wobei die Steuerlinie (10, 11) mittels eines Sensors (15, 16) in einem Bearbeitungsschritt der Materialbahn (3) abgetastet wird,
**dadurch gekennzeichnet,**
**dass** die Steuerlinie (3) eine digitale Codestruktur in Ihrer Längsrichtung (L) aufweist,
wobei die Codestruktur einen Datensatz von wenigstens vier Bit, insbesondere wenigstens zwei Byte, Informationsgehalt codiert,
und **dass** die Steuerlinie (10, 11) durch Aufbringung von Farbe mittels eines Druckwerks (8) auf die Materialbahn aufgebracht wird, wobei die Aufbringung insbesondere in demselben Bearbeitungsschritt wie eine Aufbringung des Druckbildes (9) erfolgt.

2. Vorrichtung nach Anspruch 1, **dadurch gekennzeichnet, dass** zumindest eine zweite in der Längsrichtung verlaufende Steuerlinie (11) in einem anderen Bereich der Materialbahn (3) angeordnet ist.

3. Vorrichtung nach Anspruch 2, **dadurch gekennzeichnet, dass** die zwei Steuerlinien (10, 11) verschiedenen Druckaufträgen auf derselben Materialbahn zugeordnet sind.

4. Vorrichtung nach Anspruch 2 oder 3, **dadurch gekennzeichnet, dass** die Steuerlinie (10) in einem ersten Randbereich der Materialbahn (3) angeordnet ist, wobei die zweite Steuerlinie (11) in einem in Querrichtung gegenüberliegenden, zweiten Randbereich der Materialbahn (3) angeordnet ist.

5. Vorrichtung nach einem der vorhergehenden Ansprüche, **dadurch gekennzeichnet, dass** die Codestruktur Lücken (13) der Steuerlinie (3) umfasst, wobei eine Länge jeder der Lücken (13) einen Maximalwert nicht überschreitet.

6. Vorrichtung nach einem der vorhergehenden Ansprüche, **dadurch gekennzeichnet, dass** die Vorrichtung eine Wellpappenanlage (1) umfasst, wobei insbesondere Steuerungsinformationen für die Wellpappenanlage (1) in den Datensätzen der Materialbahn (3) enthalten sind.

7. Vorrichtung nach einem der vorhergehenden Ansprüche, **dadurch gekennzeichnet, dass** die Materialbahn (3) als eine digital vorbedruckte Rolle einer digitalen Druckmaschine ausgebildet ist.

8. Vorrichtung nach einem der vorhergehenden Ansprüche, **dadurch gekennzeichnet, dass** die Materialbahn (3) zumindest zwei verschiedene, nebeneinander angeordnete und in der Längsrichtung wiederholte Druckbilder (9) aufweist, wobei insbesondere die Druckbilder (9) in der Längsrichtung unterschiedliche Rapportlängen (RL) aufweisen.

9. Vorrichtung nach einem der vorhergehenden Ansprüche, **dadurch gekennzeichnet, dass** seitlich neben der Steuerlinie (10, 11) Schnittmarken (23) aufgedruckt sind, wobei die Schnittmarken (23) als Steuersignal für ein Schneidwerk (6) auslesbar sind.

10. Vorrichtung nach einem der vorhergehenden Ansprüche, **dadurch gekennzeichnet, dass** der Datensatz eine oder mehrere Informationen enthält, ausgewählt aus der Gruppe fortlaufende Nummerierung des Druckbildes (9), Identifizierung eines Druckauftrags, Information über einen Auftragswechsel oder Information über Fehlstellen.

11. Vorrichtung nach einem der Ansprüche 1 bis 10, **dadurch gekennzeichnet, dass** zusätzlich zu der digitalen Codestruktur (12) eine menschenlesbare Information in einer Klarschrift (24) auf der Materialbahn (3) aufgebracht ist, wobei insbesondere die menschenlesbare Information (24) mit dem Informationsgehalt der Codestruktur (12) korreliert ist.

12. Materialbahn, insbesondere zur Bearbeitung mit einer Vorrichtung nach einem der vorhergehenden Ansprüche, wobei auf der Materialbahn (3) sowohl ein aufgebrachtes, insbesondere wiederholtes Druckbild (9) als auch eine in der Längsrichtung (L) erstreckte Steuerlinie (10, 11) ausgebildet ist, wobei die Steuerlinie durch Aufbringen von Farbe mittels eines Druckwerks auf die Materialbahn aufgebracht wurde, und wobei die Steuerlinie (10, 11) eine definierte Position in einer Querrichtung der Materialbahn (3) aufweist,
**dadurch gekennzeichnet,**
**dass** die Steuerlinie (10, 11) eine digitale Codestruktur in Ihrer Längsrichtung (L) aufweist, wobei die Codestruktur einen Datensatz von wenigstens vier Bit, insbesondere wenigstens zwei Byte, Informationsgehalt codiert.

13. Kartonage, insbesondere Wellpappe, hergestellt durch Aufbringen der Materialbahn (3) nach Anspruch 12 auf einen Träger (4) und Zuschnitt des Trägers (4) in Verbindung mit einer Detektion der Steuerlinie.

14. Verfahren zur Bearbeitung einer Materialbahn, umfassend die Schritte:
Zuführen einer Rolle mit einer unbehandelten Materialbahn (3) zu einer Druckmaschine und Fördern der Materialbahn in eine Längsrichtung (L);
Bedrucken der Materialbahn (3) mit zumindest einem insbesondere in der Längsrichtung (L) wiederholten Druckbild (9), insbesondere mittels eines digitalen Druckwerks;
Bedrucken der Materialbahn (3) mit einer insbesondere randseitig angeordneten Steuerlinie (10, 11);
wobei die Steuerlinie eine lineare Struktur ist, die funktionell einer Führung und/oder seitlichen Positionskontrolle im Zuge der Bearbeitung oder Verarbeitung der Materialbahn dient,
**dadurch gekennzeichnet,**
**dass** die Steuerlinie (10, 11) eine digitale Codestruktur in Ihrer Längsrichtung (11) aufweist, wobei die Codestruktur einen Datensatz von wenigstens vier Bit, insbesondere wenigstens zwei Byte, Informationsgehalt codiert, und
**dass** die Steuerlinie (10, 11) durch Aufbringung von Farbe mittels eines Druckwerks (8) auf die Materialbahn aufgebracht wird, wobei die Aufbringung insbesondere in demselben Bearbeitungsschritt wie eine Aufbringung des Druckbildes (9) erfolgt.

## Claims

1. Device for processing a material web (3), comprising
means (2) for conveying the material web in a longitudinal direction (L),
wherein both an applied, in particular repeated, printed image (9) and a control line (10, 11) extending in the longitudinal direction are formed on the material web (3), wherein the control line is a linear structure which, functionally, is used for guidance and/or lateral position control in the course of the processing or working of the material web,
wherein the control line (10, 11) has a defined position in a transverse direction of the material web (3), and
wherein the control line (10, 11) is scanned by means of a sensor (15, 16) in a processing step of the material web (3),
**characterized in that**
the control line (3) has a digital code structure in its longitudinal direction (L), wherein the code structure encodes a dataset of at least four bits, in particular at least two bytes, of information content,
and **in that** the control line (10, 11) is applied to the material web by applying colour by means of a printing unit (8), wherein the application is carried out in particular in the same processing step as an application of the printed image (9).

2. Device according to claim 1, **characterized in that** at least a second control line (11) extending in the longitudinal direction is arranged in another region of the material web (3).

3. Device according to claim 2, **characterized in that** the two control lines (10, 11) are assigned to different print jobs on the same material web.

4. Device according to claim 2 or 3, **characterized in that** the control line (10) is arranged in a first edge region of the material web (3), wherein the second control line (11) is arranged in a second edge region of the material web (3), which is opposite in the transverse direction.

5. Device according to one of the preceding claims, **characterized in that** the code structure comprises gaps (13) of the control line (3), wherein a length of each of the gaps (13) does not exceed a maximum value.

6. Device according to one of the preceding claims, **characterized in that** the device comprises a corrugated board plant (1), wherein in particular control information for the corrugated board plant (1) is contained in the datasets of the material web (3).

7. Device according to one of the preceding claims, **characterized in that** the material web (3) is formed as a digitally pre-printed roll of a digital printing machine.

8. Device according to one of the preceding claims, **characterized in that** the material web (3) has at least two different printed images (9) arranged beside one another and repeated in the longitudinal direction, wherein in particular the printed images (9) have different repeat lengths (RL) in the longitudinal direction.

9. Device according to one of the preceding claims, **characterized in that** cutting marks (23) are printed laterally beside the control line (10, 11), wherein the cutting marks (23) can be read as a control signal for a cutting mechanism (6).

10. Device according to one of the preceding claims, **characterized in that** the dataset contains one or more items of information, chosen from the group comprising consecutive numbering of the printed image (9), identification of a print job, information about a job change or information about defects.

11. Device according to one of claims 1 to 10, **characterized in that**, in addition to the digital code structure (12), an item of human-readable information is applied on the material web (3) in plain text (24), wherein in particular the item of human-readable information (24) is correlated with the information content of the code structure (12).

12. Material web, in particular for processing with a device according to one of the preceding claims, wherein both an applied, in particular repeated, printed image (9) and a control line (10, 11) extending in the longitudinal direction (L) are formed on -2-
the material web (3), wherein the control line has been applied to the material web by applying colour by means of a printing unit, and
wherein the control line (10, 11) has a defined position in a transverse direction of the material web (3),
**characterized in that**
the control line (10, 11) has a digital code structure in its longitudinal direction (L), wherein the code structure encodes a dataset of at least four bits, in particular at least two bytes, of information content.

13. Packaging board, in particular corrugated board, produced by applying the material web (3) according to claim 12 to a carrier (4) and cutting the carrier (4) to size in conjunction with detection of the control line.

14. Method for processing a material web, comprising the steps of:
feeding a roll with an untreated material web (3) to a printing machine and conveying the material web in a longitudinal direction (L),
printing the material web (3) with at least one printed image (9), in particular repeated in the longitudinal direction (L), in particular by means of a digital printing unit,
printing the material web (3) with a control line (10, 11), in particular arranged at the edge,
wherein the control line is a linear structure which, functionally, is used for guidance and/or lateral position control in the course of the processing or working of the material web,
**characterized in that**
the control line (10, 11) has a digital code structure in its longitudinal direction (11),
wherein the code structure encodes a dataset of at least four bits, in particular at least two bytes, of information content, and
**in that** the control line (10, 11) is applied to the material web by applying colour by means of a printing unit (8), wherein the application is carried out in particular in the same processing step as an application of the printed image (9).

## Revendications

1. Dispositif de traitement d'une bande de matériau (3), comprenant
des moyens (2) destinés à transporter la bande de matériau dans une direction longitudinale (L),
dans lequel une image d'impression (9) appliquée, notamment répétée, ainsi qu'une ligne de commande (10, 11) s'étendant dans la direction longitudinale sont formées sur la bande de matériau (3),
dans lequel la ligne de commande est une structure linéaire qui sert fonctionnellement à un guidage et/ou à un contrôle latéral de position au cours de l'usinage ou du traitement de la bande de matériau,
dans lequel la ligne de commande (10, 11) présente une position définie dans une direction transversale de la bande de matériau (3), et
dans lequel la ligne de commande (10, 11) est balayée au moyen d'un capteur (15, 16) lors d'une étape de traitement de la bande de matériau (3),
**caractérisé en ce que**
la ligne de commande (3) présente une structure de code numérique dans sa direction longitudinale (L), la structure de code codant un enregistrement de données d'au moins quatre bits, notamment d'au moins deux octets, de contenu d'information,
et **en ce que** la ligne de commande (10, 11) est appliquée sur la bande de matériau par application d'encre au moyen d'une unité d'impression (8), l'application étant notamment effectuée lors de la même étape de traitement qu'une application de l'image d'impression (9).

2. Dispositif selon la revendication 1, **caractérisé en ce qu'**au moins une deuxième ligne de commande (11) s'étendant dans la direction longitudinale est disposée dans une autre zone de la bande de matériau (3).

3. Dispositif selon la revendication 2, **caractérisé en ce que** les deux lignes de commande (10, 11) sont associées à des tâches d'impression différentes sur la même bande de matériau.

4. Dispositif selon la revendication 2 ou 3, **caractérisé en ce que** la ligne de commande (10) est disposée dans une première zone de bord de la bande de matériau (3), dans lequel la deuxième ligne de commande (11) est disposée dans une deuxième zone de bord, opposée et en direction transversale, de la bande de matériau (3).

5. Dispositif selon l'une quelconque des revendications précédentes, **caractérisé en ce que** la structure de code comprend des lacunes (13) de la ligne de commande (3), dans lequel une longueur de chacune des lacunes (13) ne dépasse pas une valeur maximale.

6. Dispositif selon l'une quelconque des revendications précédentes, **caractérisé en ce que** le dispositif comprend une installation pour carton ondulé (1), dans lequel des informations de commande destinées à l'installation pour carton ondulé (1) sont contenues dans les enregistrements de données de la bande de matériau (3).

7. Dispositif selon l'une quelconque des revendications précédentes, **caractérisé en ce que** la bande de matériau (3) est réalisée sous la forme d'un cylindre préimprimé numériquement d'une machine d'impression numérique.

8. Dispositif selon l'une quelconque des revendications précédentes, **caractérisé en ce que** la bande de matériau (3) présente au moins deux images d'impression (9) différentes, disposées côte à côte et répétées dans la direction longitudinale, dans lequel les images imprimées (9) présentent notamment des longueurs de répétition (RL) différentes dans la direction longitudinale.

9. Dispositif selon l'une quelconque des revendications précédentes, **caractérisé en ce que** des repères de coupe (23) sont imprimés latéralement à côté de la ligne de commande (10, 11), dans lequel les repères de coupe (23) peuvent être lus sous la forme d'un signal de commande destiné à un mécanisme de coupe (6).

10. Dispositif selon l'une quelconque des revendications précédentes, **caractérisé en ce que** l'enregistrement de données contient une ou plusieurs informations choisies dans le groupe constitué par une numérotation consécutive de l'image d'impression (9), l'identification d'une tâche d'impression, une information concernant un changement de tâche ou une information concernant des défauts.

11. Dispositif selon l'une quelconque des revendications 1 à 10, **caractérisé en ce qu'**une information lisible par l'homme dans un texte en clair (24) est appliquée sur la bande de matériau (3) en plus de la structure de code numérique (12), dans lequel l'information lisible par l'homme (24) est notamment corrélée avec le contenu d'information de la structure de code (12).

12. Bande de matériau, notamment destinée à être traitée par un dispositif selon l'une quelconque des revendications précédentes, dans laquelle une image d'impression (9) appliquée, notamment répétée, ainsi qu'une ligne de commande (10, 11) s'étendant dans la direction longitudinale (L) sont formées sur la bande de matériau (3), dans laquelle la ligne de commande a été appliquée sur la bande de matériau par application d'encre au moyen d'une unité d'impression, et
dans laquelle la ligne de commande (10, 11) présente une position définie dans une direction transversale de la bande de matériau (3),
**caractérisée en ce que**
la ligne de commande (10, 11) présente une structure de code numérique dans sa direction longitudinale (L), la structure de code codant un enregistrement de données d'au moins quatre bits, notamment d'au moins deux octets, de contenu d'information.

13. Emballage en carton, notamment en carton ondulé, fabriqué par application de la bande de matériau (3) selon la revendication 12 sur un support (4) et par découpe du support (4) en liaison avec la détection de la ligne de commande.

14. Procédé de traitement d'une bande de matériau, comprenant les étapes consistant à :
introduire un cylindre comportant une bande de matériau non traitée (3) à une machine d'impression et transporter la bande de matériau dans une direction longitudinale (L) ;
imprimer sur la bande de matériau (3) au moins une image d'impression (9) répétée, notamment dans la direction longitudinale (L), notamment au moyen d'une unité d'impression numérique ;
imprimer sur la bande de matériau (3) une ligne de commande (10, 11) notamment disposée sur le bord ;
dans lequel la ligne de commande est une structure linéaire qui sert fonctionnellement à un guidage et/ou à un contrôle latéral de position au cours de l'usinage ou du traitement de la bande de matériau,
**caractérisé en ce que**
la ligne de commande (10, 11) présente une structure de code numérique dans sa direction longitudinale (11), la structure de code codant un enregistrement de données d'au moins quatre bits, notamment d'au moins deux octets, de contenu d'information, et
**en ce que** la ligne de commande (10, 11) est appliquée sur la bande de matériau par application d'encre au moyen d'une unité d'impression (8), l'application étant notamment effectuée lors de la même étape de traitement que l'application de l'image d'impression (9).
